Europäisches Patentamt

European Patent Office

Office européen des brevets

(11) Veröffentlichungsnummer: **0 466 104 A1**

# (12) EUROPÄISCHE PATENTANMELDUNG

(21) Anmeldenummer: **91111417.1**

(51) Int. Cl.5: **H01S 3/03**

(22) Anmeldetag: **09.07.91**

(30) Priorität: **12.07.90 DE 4022167**

(43) Veröffentlichungstag der Anmeldung:
**15.01.92 Patentblatt 92/03**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Krüger, Hans, Dipl.-Phys.**
**Peralohstrasse 13**
**W-8000 München 83(DE)**
Erfinder: **Weber, Hans, Dipl.-Phys.**
**Bahnhofstrasse 26**
**W-8900 Augsburg(DE)**

(54) **Wellenleiterlaser.**

(57) In einem Wellenleiterlaser, in dem zwei benachbarte Transversalmoden, von denen einer der Grundmode ist, einer Laserschwingung aufgrund der Dimensionierung des Wellenleiters und der Gaszusammensetzung anschwingen können, wird eine Schwingung im Grundmode erreicht, indem der Entladungsraum (1, 12) und die Resonatorspiegel (6, 7, 10, 11) so dimensioniert werden, daß für beide Transversalmoden gleichzeitig jeweils eine ganze Zahl von Longitudinalmoden auf der Resonatorlänge auftreten.

Die Erfindung eignet sich für monomodige $CO_2$- oder CO-Laser.

## FIG 3

Die vorliegende Erfindung betrifft einen Wellenleiterlaser nach dem Oberbegriff des Patentanspruchs 1. Ein derartiger Wellenleiterlaser ist aus der US-PS 4,719,639 bekannt. Diese Patentschrift beschreibt sowohl einen stabilen als auch einen instabilen Resonator, welcher einen Singlemodelaser bilden soll. Hierzu werden konkrete Dimensionierungen angegeben, die auf sehr kleine Strahlquerschnitte hinauslaufen. Um Single-Mode-Betrieb zu erhalten, wird dort die Beugung an einer Spiegelkante mit herangezogen. Die Spiegelkante muß in definiertem Abstand von den Elektroden bzw. Wellenleiterflächen liegen. Dadurch werden aber nicht nur die Verluste für die Moden höherer Ordnung, sondern auch die des Grundmode durch Beugungsverluste merklich erhöht, die Ausbeute an Laserlicht wird verringert.

Die Aufgabe, die der vorliegenden Erfindung zugrundeliegt, besteht darin, daß in Lasern gemäß dem Oberbegriff des Patentanspruchs 1, bei denen zwei benachbarte Moden anschwingen können, bei erhöhter Ausbeute an Laserlicht ein monomodiger Betrieb erreicht wird. Diese Aufgabe wird durch die kennzeichnenden Merkmale des Anspruchs 1 gelöst.

Bei der Erfindung wird der an sich bekannte Effekt ausgenützt, daß sich bei zwei gleichzeitig anschwingenden Longitudinalmoden einer Laserschwingung die stärker ausgeprägte durchsetzt und die schwächere unterdrückt wird. Erfindungsgemäß läßt sich dieser Effekt auch zur Unterdrückung eines benachbarten Transversalmodes einer Laserschwingung ebenfalls einsetzen, wenn die Resonanzbedingung für beide Transversalmoden erfüllt ist. Die Resonanzbedingung gemäß Patentanspruch 1 läßt sich durch entsprechende Wahl der Abmessungen für zwei benachbarte Transversalmoden erfüllen. Auslöschung des schwächeren Transversalmodes wird erreicht.

Zur Erzeugung einer Schwingung im Grundmode empfiehlt es sich, daß der Querschnitt des Wellenleiters quadratisch ist und daß der Abstand 2a der Wellenleiterflächen der Beziehung genügt: $2a = 2\sqrt{0{,}1875 \times L \times \lambda}$. Dabei bedeuten L = Resonatorlänge und $\lambda$ = Wellenlänge der Laserstrahlung.

Die erfindungsgemäßen Laser sind vorteilhaft als $CO_2$- oder CO- Laser ausgeführt.

Besonders vorteilhaft läßt sich nach der Erfindung ein Slab- oder Bandleiterlaser aufbauen, der im Grundmode schwingt und der einen annähernd quadratischen Querschnitt des Laserstrahles im Austrittsfenster besitzt und einen rotationssymmetrischen Strahlquerschnitt im Fernfeld ausbildet, wobei der gegenseitige Abstand h der Wellenleiterflächen nach der Beziehung $h = 2x\sqrt{0{,}1875xLx\lambda}$ gewählt ist, wobei der annähernd quadratische Querschnitt durch die Breite B erreicht wird, indem diese angenähert der Beziehung $B = h/(|R_1/R_2|-1)$ genügt, und wobei die rotationssymmetrische Ausbildung des Strahles im Fernfeld durch Anpassung der Breite des Austrittsfensters gewährleistet ist. Hierbei bedeuten $R_1$ den Krümmungsradius eines konkaven und $R_2$ den eines konvexen Resonatorspiegels. Ein derartiger Laser enthält vorteilhaft ein für $CO_2$-Laser geeignetes Gasgemisch, wobei der Abstand der Wellenleiterflächen (h) der folgenden Beziehung genügt: $h(L) = \sqrt{L'}/11{,}22$ [mm] .

Eine optimale Laserleistung wird erreicht, indem bei einem erfindungsgemäßen $CO_2$-Bandleiterlaser das Verhältnis B'/B nach $B'/B \approx t(L) = \sqrt{0{,}0008xLx\tau}$- $\tau$ gewählt wird. Dabei bedeuten t(L) = Auskoppelverhältnis, $\tau = \tau_s + \tau_r$ = Verluste (Spiegelverluste + Rückkoppelverluste) des Resonators.

Die Erfindung wird nun anhand von vier Figuren näher erläutert. Sie ist nicht auf die in den Figuren gezeigten Beispiele beschränkt.

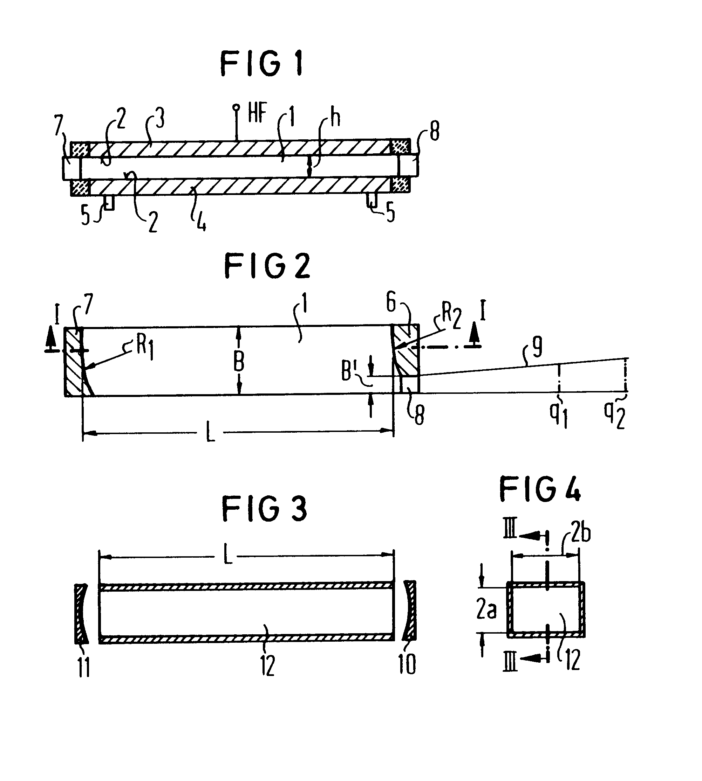

Die Figuren 1 und 2 zeigen einen erfindungsgemäßen Bandleiterlaser und die Figuren 3 und 4 einen erfindungsgemäßen Wellenleiterlaser mit stabilem Resonator schematisch.

Ein Bandleiterlaser weist einen Gasentladungsraum 1 auf, welcher durch zueinander parallele Wellenleiterflächen 2 in einer ersten Richtung begrenzt ist. Die Wellenleiterflächen 2 besitzen einen gegenseitigen Abstand gemäß der Beziehung $h = 2\sqrt{0{,}1875xLx\lambda}$[mm]. In einer zweiten, zur ersten senkrechten Richtung ist der Gasentladungsraum ebenfalls begrenzt und besitzt eine Breite B, die der Beziehung $B = h/(|R_1/R_2$-1) genügt. An die Wellenleiterflächen 2 grenzen Zylinderspiegel 6 und 7 an, welche einen einseitig instabilen Resonator bilden. Hierzu ist der Spiegel 7 mit einem Krümmungsradius $R_1$ konkav und der Spiegel 6 mit einem Krümmungsradius $R_2$ konvex gewölbt. An den Spiegel 6 grenzt ein Strahlaustrittsfenster 8 an. Das Strahlaustrittsfenster 8 weist einen annähernd quadratischen Querschnitt auf. Seine Breite B' ist so eingestellt, daß sich im Fernfeld ein rotationssymmetrischer Laserstrahl ausbildet. Als Fernfeld ist dabei eine Entfernung vom Strahlaustrittsfenster 8 zu verstehen, in der sich zwar die Größe, nicht aber die Form der Querschnittsflächen q1 bzw. q2 des Laserstrahles noch nennenswert ändert. Da ein Bandleiterlaser in Richtung der Breite B' eine andere Strahldivergenz besitzt als in der dazu senkrechten Richtung von h, weicht der Querschnitt des Strahlaustrittsfensters von dem eines Quadrates ab und ist auf optimalen Abgleich der Formen der Querschnittsflächen q1 und q2 dimensioniert. An die Wellenleiterflächen 2 grenzen Elektroden 3 und 4 an, von denen die Elektrode 3 mit HF gespeist wird und die Elektrode 4 mit Masse verbunden ist. Die Elektrode 4 weist Kühlkanäle und Anschlüsse 5 für Kühlmittel auf. Da die Elektrode 4 geerdet ist, ergeben sich auch durch die Kühlungseinrichtung keine Isolationsprobleme.

Die Figuren 3 und 4 zeigen einen Wellenleiterlaser mit rechteckförmigem Querschnitt. Die Abmessungen 2a, 2b und L sind auf die Einhaltung der Resonanzbedingung

$$Q = L \times \sqrt{(\frac{2}{\lambda})^2 - (\frac{m}{2a})^2 - (\frac{n}{2b})^2} \text{ hin}$$

dimensioniert, so daß sich hier auch bei großen Fresnelzahlen ein monomodiger Betrieb ergibt. Die Spiegel 10 und 11 bilden hier einen stabilen Resonator. Einer der Spiegel 10 oder 11 ist teildurchlässig, so daß in an sich bekannter Weise ein Laserstrahl mit dem Querschnitt des Entladungsraumes 12 entsteht, welcher aufgrund der Erfüllung der Bedingung für Monomodigkeit im Fernfeld in einen rotationssymmetrischen Strahl übergeht.

**Patentansprüche**

1. Wellenleiterlaser mit einem Gas als laseraktivem Medium, welches einen Gasentladungsraum ausfüllt, mit einem Resonator und einer Dimensionierung des Gasentladungsentladungsraumes und einer Zusammensetzung des Lasergases, die ein Anschwingen von zwei oder mehr Transversalmoden der Laserstrahlung zulassen, wobei Maßnahmen vorgesehen sind, die einen Grundmodebetrieb gewährleisten, **dadurch gekennzeichnet**, daß zur Gewährleistung des Grundmodebetriebes die Abmessungen des Lasers so gewählt sind, daß die Beziehung:

$$Q = L \times \sqrt{(\frac{2}{\lambda})^2 - (\frac{m}{2a})^2 - (\frac{n}{2b})^2}$$

für zwei benachbarte Transversalmoden (Grundmode und 1.höherer Mode) unabhängig von L und $\lambda$ zumindest angenähert eine ganze Zahl ergibt und die Neigung der Spiegel so justiert ist, daß der erste höhere Mode durch den Grundmode unterdrückt wird. Dabei bedeuten: Q = Modenzahl der Longitudinalmoden, L = Resonatorlänge, $\lambda$ = Laserwellenlänge, 2a, 2b = Kanten des Querschnittes eines rechteckförmigen Wellenleiters, m, n = Modenzahl der Transversalmoden; Grundmode: m = 1, n = 1.

2. Wellenleiterlaser nach Anspruch 1, **dadurch gekennzeichnet**, daß der Querschnitt des Wellenleiters quadratisch ist und daß der Abstand 2a der Wellenleiterflächen der Beziehung genügt: $2a = 2 \times \sqrt{0,1875 \times L \times \lambda}$ .

3. Wellenleiterlaser nach dem Oberbegriff von Anspruch 1, welcher als Slab- oder Bandleiterlaser ausgebildet ist, wobei ein instabiler Resonator vorgesehen ist und wobei ein Austrittsfenster für die Laserstrahlung an einen Spiegel angrenzend angeordnet ist, **dadurch gekennzeichnet**, daß zur Erzeugung eines Laserstrahles im Grundmode ein Austrittsfenster mit annähernd quadratischem Querschnitt vorgesehen ist, daß durch die Einstellung der Breite B' des Austrittsfensters ein rotationssymmetrischer Strahlquerschnitt des Laserstrahles im Fernfeld gewährleistet ist, daß für den Abstand h der Wellenleiterflächen gilt: $h = 2 \times \sqrt{0,1875 \times L \times \lambda}$ und daß die Breite B des Gasentladungsraumes der Beziehung $B = h/(|R_1/R_2|-1)$ angenähert genügt. Dabei bezeichnet $R_1$ den Krümmungsradius des konkaven und $R_2$ den des konvexen Spiegels.

4. Wellenleiterlaser nach Anspruch 3, **dadurch gekennzeichnet**, daß er ein $CO_2$-Lasergas enthält und daß der gegenseitige Abstand h (L) der Wellenleiterflächen der Bedingung genügt: $h(L) = \sqrt{L}/11,22$ (mm).

5. Slab- oder Bandleiterlaser nach einem der Ansprüche 3 bis 4, **dadurch gekennzeichnet**, daß das Verhältnis B'/B in etwa dem näherungsweise optimalen Auskoppelverhältnis $t(L) = \sqrt{0,0008 \times L \times \tau} - \tau$ entspricht, wobei $\tau = \tau_s + \tau_r$ die Verluste (Spiegelverluste + Rückkoppelverluste) darstellt.

EP 0 466 104 A1

FIG 1

FIG 2

FIG 3

FIG 4

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 719 639 (J. TULIP)<br>* Patentansprüche 1-14; Abbildungen 1-3 *<br>– – – | 1 | H 01 S 3/03 |
| A | APPLIED PHYSICS, Band 8, Nr. 4, Dezember 1975, Seiten 281-291; B. ADAM et al.: "Transversely excited 337 mum HCN waveguide laser"<br>* Abschnitt 1: "Waveguide theory"; Abbildungen 1-3 *<br>– – – – – | 1 | |

**RECHERCHIERTE SACHGEBIETE (Int. Cl.5)**

H 01 S

Der vorliegende Recherchenbericht wurde für alle Patentansprüche erstellt

| Recherchenort | Abschlußdatum der Recherche | Prüfer |
|---|---|---|
| Den Haag | 22 August 91 | MALIC K. |